# EUROPEAN PATENT APPLICATION

(11) **EP 2 466 920 A1**
(43) Date of publication of application: **20.06.2012**
(21) Application number: 09848203.7
(22) Date of filing: 11.12.2009
(51) Int. Cl.: H04W 4/00

(54) **METHOD AND DEVICE FOR SWITCHING INPUT METHODS OF MOBILE TERMINAL**

(30) Priority: 10.08.2009 CN 200910162838
(71) Applicant: ZTE Corporation, Shenzhen, Guangdong 518057 (CN)
(72) Inventor: HOU, Yuming, Guangdong 518057 (CN)
(74) Representative: Jansen, Cornelis Marinus
(86) International application number: PCT/CN2009/075520
(87) International publication number: WO 2011/017873

(57) **Abstract**

The present invention provides a method and apparatus for switching input methods of a mobile terminal, the method comprises: Step A: receiving an operation instruction from a key to call out an input method selecting interface; Step B: reading a selection of an input method in the input method selecting interface; Step C: entering an editing environment of the selected input method; Step D: judging whether a plurality of input characters, which are not yet interpreted before switching the input method, are meaningful to the input method after switching; and Step E: if the plurality of input characters are meaningful, then interpreting the input character which is not yet interpreted by using the input method after switching. A user can input information into a mobile terminal more conveniently and rapidly through the present invention, and the input speed and user experience are improved.

## Description

### Field of the Invention

The present invention belongs to the technical field of word processing of embedded terminal equipment, and in particular to a method and apparatus for switching input methods of a mobile terminal which has a man-machine interaction interface.

### Background of the Invention

Currently, man-machine interaction terminals into which languages and words are inputted by keyboards still occupy a certain share of the market. All mobile terminals will provide rich input methods so as to facilitate the users to input the needed text. However, according to the current input method selecting solution of mobile terminals, faults often occur during the switching between input methods, which causes the editing speed to decline and affects user experience.

Current non-handwriting input method switching is mostly achieved by special keys or by selecting from an input method list. The switching rate of this input method switching manner is rather slow, and if the user finds that the inputted information is interpreted using a wrong input method, then the information which is being processed will disappear with the action of cancelling the input method, thus the input efficiency is reduced.

### Summary of the Invention

The technical problem to be solved by the present invention is the problem that the editing speed is declined and user experience is affected due to the fault of input method switching in relevant art. For this end, a mobile terminal input method switching solution which can improve input efficiency is provided so as to solve at least one of the above problems.

The present invention provides a method for switching input methods of a mobile terminal, the method comprises:
Step A: receiving an operation instruction from a key to call out an input method selecting interface;
Step B: reading a selection of an input method in the input method selecting interface;
Step C: entering an editing environment of the selected input method;
Step D: judging whether a plurality of input characters, which are not yet interpreted before switching the input method, are meaningful to the input method after switching; and
Step E: if the plurality of input characters are meaningful, then interpreting the plurality of input characters which are not yet interpreted using the input method after switching.

Furthermore, the operation instruction is sent out when the press duration of the key exceeds a predetermined value or the key is double clicked.

Furthermore, the step E comprises: if the plurality of input characters are not meaningful, then entering an editing environment of the input method after switching.

Furthermore, the input method selecting interface comprises at least one of the following: an uppercase letter input method, a lowercase letter input method, a number input method, a stroke input method, a pinyin input method, and a smart English input method.

Furthermore, in the input method selecting interface which is called out, the current input method option is located at the center, surrounded by multiple input method options.

Furthermore, before the step D, the method comprises: storing the plurality of input characters which are not yet interpreted before switching the input method; and transmitting the stored information to the input method after switching.

Furthermore, the step C comprises: comparing whether the input method before switching is as same as the input method after switching; and if they are different, then switching the current editing environment to the editing environment of the selected input method.

In order to solve the above technical problem, the present invention further provides an apparatus for switching input methods of a mobile terminal, the apparatus comprises:
an input method selecting interface calling out module, which is configured to receive an operation instruction from a key to call out an input method selecting interface;
an input method selecting module, which is configured to read a selection of an input method in the input method selecting interface;
an editing environment switching module, which is configured to enter an editing environment of the selected input method;
a character judging module, which is configured to judge whether a plurality of input characters, which are not yet interpreted before switching the input method, are meaningful to the input method after switching; and
a continued interpreting module for information to be processed, which is configured to interpret the plurality of input characters, which are not yet interpreted using the input method before switching, if the plurality of input characters are meaningful to the input method after switching.

Furthermore, the editing environment switching module comprises: a comparing unit, which is configured to compare whether the input method before switching is as same as the input method after switching; and a switching unit, which is configured to switch to a new input method in the situation that the comparing unit confirms that the input method before switching is different from the input method after switching.

Furthermore, the apparatus for switching input methods of a mobile terminal of the present invention further comprises a storage device, which is configured to store the input character which is not yet interpreted before switching the input method.

The beneficial effects of the present inventions are as follows:
the present invention provides a solution for switching input methods of a mobile terminal, and during the process of inputting information by a user, when the user realizes that the input method is wrongly selected, he does not have to thoroughly cancel the current information inputting process like the conventional art, but can directly call out the input method selecting interface through a specific keying manner of the present invention and rapidly select the needed correct input method using the direction keys and middle key so as to rapidly switch to a new input method. Moreover, as to the information which is inputted by the user but not yet correctly interpreted before the switching of the input method, if this information is meaningful to the new input method, then the new input method will first continue to process this information, not like the conventional art in which once the editing environment enters a new input method all the input information which has not yet been processed will be lost. In addition, in the present invention, the information, which is not yet correctly interpreted before the switching of the input method, is stored in a storage device and delivered to the new input method to be interpreted, and this storage device can be realized by the functions of the input method system itself.

The present invention uses the direction keys and the middle key which are located right at the center of the mobile terminal to rapidly switch to a new input method when the user selects an input method, thus the user can input information into the mobile terminal more conveniently and rapidly. The present invention complies with human engineering principles and can improve the input rate and user experience. It should be noted that the technical solution of the present invention is realized by mobile phone software, so there is no need to add additional hardware, unless the provided specific keying manner must be assisted by a kind of hardware.

### Brief Description of the Accompanying Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a flow chart of a method for switching input methods of a mobile terminal according to an embodiment of the present invention;
Fig. 2 is a preferred flow chart according to a method embodiment of the present invention;
Fig. 3 is a schematic diagram showing the effect of calling out an input method selecting interface by long pressing key "2" according to an embodiment of the present invention;
Fig. 4 is a schematic diagram showing the principle of switching input methods according to an embodiment of the present invention; and
Fig. 5 is a structural schematic diagram of an apparatus for switching input methods of a mobile terminal according to an embodiment of the present invention.

### Detailed Description of the Embodiments

It should be noted that the embodiments of the present application and the features in the embodiments can be combined with each other if there is no conflict. The present invention is described in details with reference to the accompanying drawings and in combination with the embodiments hereinafter. In the following embodiments, the steps shown or described in the flowcharts of the accompanying drawings can be performed in an order different from the order here.

### Method embodiments

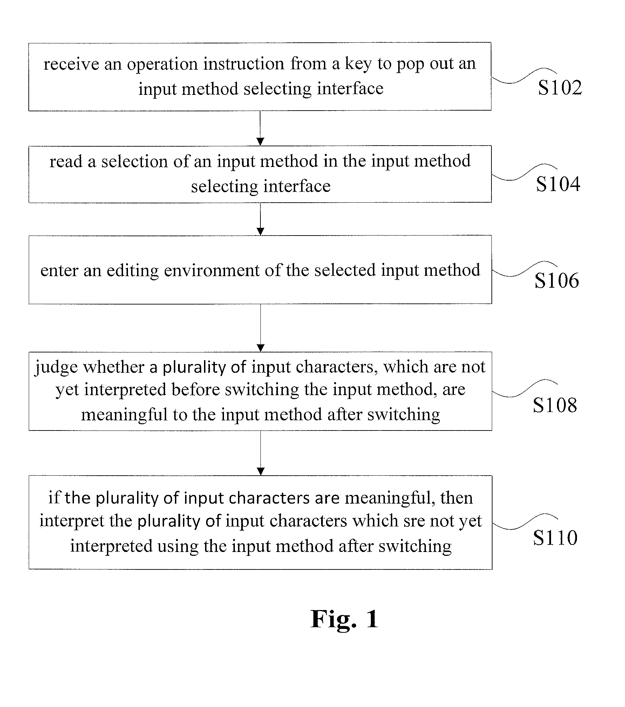

A method for switching input methods of a mobile terminal is provided according to an embodiment of the present invention, and Fig. 1 is a flow chart of a method for switching input methods of a mobile terminal according to an embodiment of the present invention, and as shown in Fig. 1, this method comprises steps S 102 to S110 as follows:
Step S 102: receiving an operation instruction from a key to call out an input method selecting interface;
Step S104: reading a selection of an input method in the input method selecting interface;
Step S106: entering an editing environment of the selected input method; and
Step S 108: judging whether a plurality of input characters, which are not yet interpreted before switching the input method, are meaningful to the input method after switching; and
Step S110: if the plurality of input characters are meaningful, then interpreting the plurality of input characters which are not yet interpreted by using the input method after switching.

Preferably, before step S 102, the operation instruction is sent out when the press duration of the key exceeds a predetermined value or the key is double clicked.

Preferably, step S106 comprises: comparing whether the input method before switching is as same as the input method after switching; and if they are different, then switching the current editing environment to the editing environment of the selected input method.

Preferably, before step S108, the input character which is not yet interpreted is stored before switching the input method; and the stored information is delivered to the input method after switching.

Preferably, step S 110 comprises: if the plurality of input characters are not meaningful, then entering an editing environment of the input method after switching.

In particular, the input method selecting interface comprises at least one of the following: an uppercase letter input method, a lowercase letter input method, a number input method, a stroke input method, a pinyin input method, and a smart English input method.

In addition, in the input method selecting interface which is called out, the current input method option is located at the center, surrounded by multiple input method options.

The embodiments of the present invention will now be further described in conjunction with drawings and specific embodiments hereinafter.

The research of the method for switching input methods of a mobile terminal according to the embodiments of the present invention mainly considers to facilitate the user to select an input method rapidly and conveniently, when the user presses the keyboard in a predetermined manner, an input method selecting menu will pop out, which menu simultaneously provides multiple input methods, and the user can rapidly select just by using the direction keys and the information brought by the key(s) which is(are) pressed by the user before the switching of the input method can be simultaneously delivered to the newly selected input method.

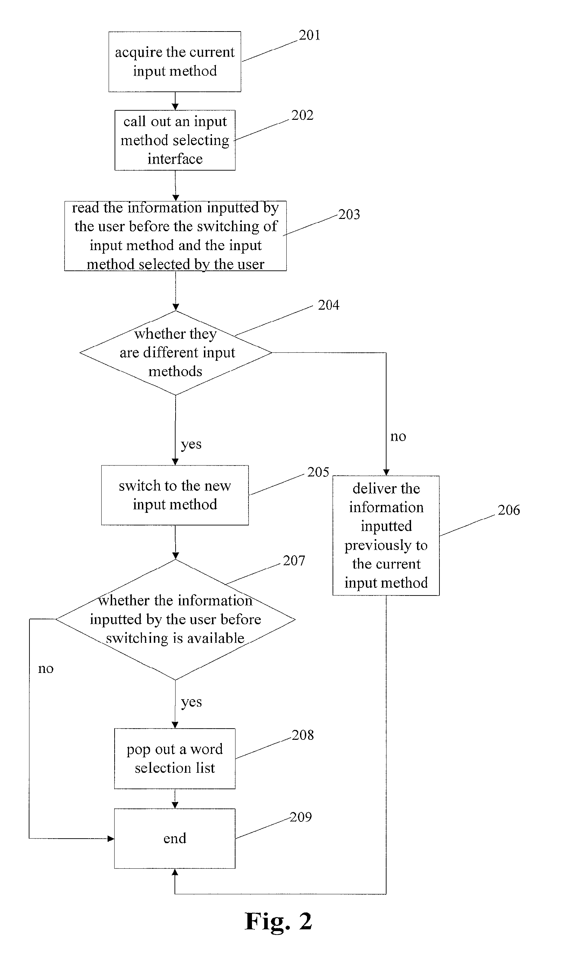

Fig. 2 is a preferred flow chart according to a method embodiment of the present invention, and as shown in Fig. 2, this method comprises the steps as follows:
Step 201: acquire the current input method;
Step 202: call out an input method selecting interface by pressing a key which currently needs to be long pressed or by double clicking the same (assume that it currently needs to press key "2", and according to the currently practical input intention, it also may need to press other keys currently, for example, currently it needs to input " 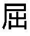 ", then currently it needs to press key "7"), and in the input method selecting interface which is called out, the current input method is arranged right at the center of the input method selecting interface and other input method features or prompts are displayed around the current input method prompt (Fig. 2 is a schematic diagram showing the effect of calling out an input method selecting interface by long pressing key "2" according to an embodiment of the present invention, as shown in Fig. 2);
Step 203: read the information (i.e. the information represented by the keyboard which is pressed by the user) inputted by the user before the switching of input method of this time and the input method selected by the user, wherein the user can select the input method using the direction keys and middle key of the mobile phone;
Step 204: when the user presses selection confirm, compare whether the input method selected by the user is as same as the current input method, if they are different, then perform step 205, if they are the same, then perform step 206;
Step 205: switch to the new input method and then perform step 207;
Step 206: deliver the information represented by the keyboard which is pressed by the user to the input method which is being used now;
wherein the information represented by the keyboard which is pressed by the user is the information inputted by the user before the switching of input method of this time and this information is stored, which in particular can be stored by a storage device and can also be stored by the input method system itself;
Step 207: judge whether the information inputted by the user before switching is available, i.e. whether it is meaningful to the new input method, if it is available, then perform step 208, if it is not available, then perform step 209;
Step 208: deliver the information inputted by the user before switching to the new input method to be interpreted, and provide a corresponding word list when displaying the new input method, then perform step 209; and
Step 209: the user selection is ended, and the editing environment works under the new input method.

A specific example of the application according to the method of the present invention is provided hereinafter: set the input method before switching to be the pinyin input method, and "me" has been inputted, if it attempts to switch to the smart English input method and input " 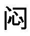 ", then long press or double click key "6" to call out the input method selecting interface and select the smart English input method, then the smart English input method continues to interpret the "me" which is already inputted, i.e. interpret "me" and "n" inputted on key "6" together, then " 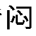 " can be inputted.

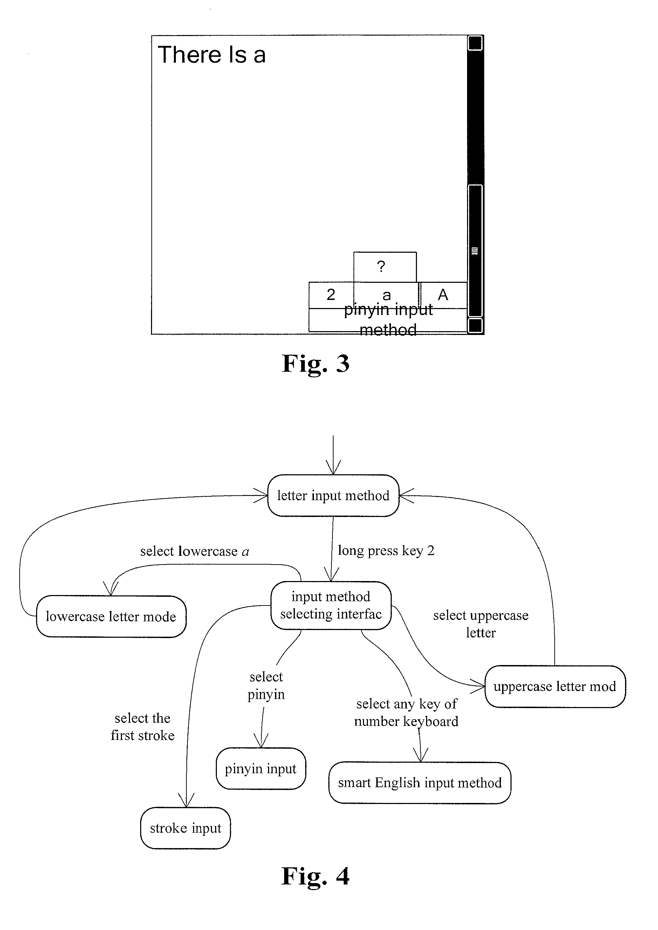

Fig. 3 is a schematic diagram showing the effect of calling out an input method selecting interface by long pressing key "2" according to an embodiment of the present invention, and as shown in Fig. 3, in the input method selecting interface which is called out in one embodiment of the present invention, the input methods are arranged in the shape of T. Assume that the current input method is lowercase letter input method, then *a* is located at the center, numbers are on the left, upper letter A is on the right, pinyin input is at the bottom, and stroke input is at the top.

Fig. 4 is a schematic diagram showing the principle of switching input methods according to an embodiment of the present invention, as shown in Fig. 4, if uppercase A is selected, then uppercase A will be twinkling highlighted in the text, and during highlighting, uppercase A, B and C can be inputted, selecting middle lowercase *a* is similar to selecting uppercase A, i.e. if lowercase *a* is selected, then lowercase *a, b* and c can be selected to input, likewise, if 2 is selected, then 2 is directly inputted on the screen.

If pinyin input is selected, then lowercase *a* is used as the first pinyin initial. If stroke is selected, then "|" is used as the first stroke. If another letter is directly pressed without selection, then directly enter the smart pinyin input method, and the inputted letter is used as the input of the smart pinyin input method. In addition, in the embodiments of the present invention, the input of symbols does not belong to any input method.

### Apparatus embodiments

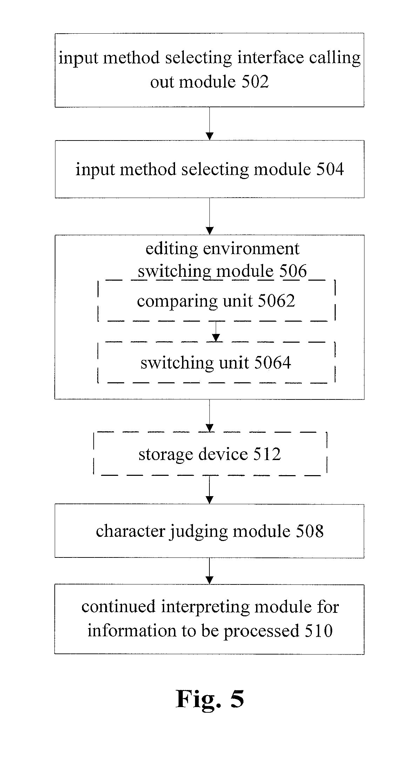

An apparatus for switching input methods of a mobile terminal is provided according to an embodiment of the present invention, and Fig. 5 is a structural schematic diagram of an apparatus for switching input methods of a mobile terminal according to an embodiment of the present invention, as shown in Fig. 5, the apparatus for switching input methods of a mobile terminal of the embodiment of the present invention comprises: an input method selecting interface calling out module 502, an input method selecting module 504, an editing environment switching module 506, a character judging module 508 and a continued interpreting module for information to be processed 510.

In this case, the input method selecting interface calling out module 502 is configured to receive an operation instruction from a key so as to call out an input method selecting interface. In particular, this key is pressed down in a predetermined manner, which comprises double clicking this key or long pressing this key till the input method selecting interface is called out.

The input method selecting module 504 is configured to read a selection of an input method in the input method selecting interface.

The editing environment switching module 506 is configured to enter the editing environment of the selected input method.

The character judging module 508 is configured to judge whether a plurality of input characters, which are not yet interpreted before switching the input method, are meaningful to the input method after switching; and
the continued interpreting module for information to be processed 510 is configured to interpret the plurality of input characters which are not yet interpreted using the input method before switching, if the plurality of input characters are meaningful to the input method after switching.

Preferably, the editing environment switching module 506 comprises: a comparing unit 5062, which is configured to compare whether the input method before switching is as same as the input method after switching; and a switching unit 5064, which is configured to switch to a new input method in the situation that the comparing unit 5062 confirms that the input method before switching is different from the input method after switching.

Preferably, this apparatus further comprises: a storage device 512, which is configured to store the plurality of input characters which are not yet interpreted before switching the input method. Wherein, this storage device 512 can be an independent memory and can also be a memory of the input method system itself.

In summary, the present invention uses the direction keys and the middle key at the center of a mobile terminal to switch to the new input method when the user selects the input method, thus the user can input information into the mobile terminal more conveniently and rapidly, and also the input rate and user experience are improved.

The above described particular embodiments give a further detailed description of the objects, technical solutions and beneficial effects of the present invention, and it should be noted that what are described above are merely specific embodiments of the present invention, and those skilled in the art can make various changes and alternatives to the present invention without departing from the spirit and scope of the present invention. In this way, if these modifications and alternatives of the present invention belong to the scope of the technical solution recorded by the claims and equivalent technologies thereof, then the present invention is also intended to comprise these modifications and alternatives.

## Claims

1. A method for switching input methods of a mobile terminal, **characterized in that** the method comprises:
Step A: receiving an operation instruction from a key to call out an input method selecting interface;
Step B: reading a selection of an input method in the input method selecting interface;
Step C: entering an editing environment of the selected input method;
Step D: judging whether a plurality of input characters, which are not yet interpreted before switching, are meaningful to the input method after switching; and
Step E: if the plurality of input characters are meaningful, then interpreting the plurality of input characters which are not yet interpreted by using the input method after switching.

2. The method for switching input methods of a mobile terminal according to Claim 1, **characterized in that**,
when the press duration of the key exceeds a predetermined value or the key is double clicked, sending the operation instruction.

3. The method for switching input methods of a mobile terminal according to Claim 1, **characterized in that** the step E comprises:
if the plurality of input characters are not meaningful, then entering an editing environment of the input method after switching.

4. The method for switching input methods of a mobile terminal according to Claim 2 or 3, **characterized in that** the input method selecting interface comprises at least one of the following: an uppercase letter input method, a lowercase letter input method, a number input method, a stroke input method, a pinyin input method, and a smart English input method.

5. The method for switching input methods of a mobile terminal according to Claim 1, **characterized in that**,
in the input method selecting interface which is called out, the current input method option is located at the center, surrounded by multiple input method options.

6. The method for switching input methods of a mobile terminal according to Claim 1, **characterized in that** before the step D, the method comprises:
storing the plurality of input characters which are not yet interpreted before switching; and
transmitting the stored information to the input method after switching.

7. The method for switching input methods of a mobile terminal according to Claim 6, **characterized in that** the step C comprises:
comparing whether the input method before switching is as same as the input method after switching; and
if they are different, then switching the current editing environment to the editing environment of the selected input method.

8. An apparatus for switching input methods of a mobile terminal, **characterized in that** the apparatus comprises:
an input method selecting interface calling out module, configured to receive an operation instruction from a key so as to call out an input method selecting interface;
an input method selecting module, configured to read a selection of an input method in the input method selecting interface;
an editing environment switching module, configured to enter an editing environment of the selected input method;
a character judging module, configured to judge whether a plurality of input characters, which are not yet interpreted before switching, are meaningful to the input method after switching; and
a continued interpreting module for information to be processed, configured to interpret the plurality of input characters, which are not yet interpreted by using the input method before switching, if the plurality of input characters are meaningful to the input method after switching.

9. The apparatus for switching input methods of a mobile terminal according to Claim 8, **characterized in that** the editing environment switching module comprises:
a comparing unit, configured to compare whether the input method before switching is the same as the input method after switching; and
a switching unit, configured to switch to a new input method in the situation that the comparing unit confirms that the input method before switching is different from the input method after switching.

10. The apparatus for switching input methods of a mobile terminal according to Claim 9, **characterized in that** the apparatus further comprises:
a storage device, configured to store the plurality of input characters which are not yet interpreted before switching the input method.
